Europäisches Patentamt

European Patent Office

Office européen des brevets

(19)

(11) Veröffentlichungsnummer: **0 262 322**
**A2**

(12)                     **EUROPÄISCHE PATENTANMELDUNG**

(21) Anmeldenummer: 87110737.1

(22) Anmeldetag: 24.07.87

(51) Int. Cl.⁴: **G01M 11/00** , G02B 23/12 ,
G01J 5/48

(30) Priorität: **29.08.86 DE 3629457**

(43) Veröffentlichungstag der Anmeldung:
**06.04.88 Patentblatt 88/14**

(84) Benannte Vertragsstaaten:
**CH DE FR GB LI NL**

(71) Anmelder: **Firma Carl Zeiss**

**D-7920 Heidenheim (Brenz)(DE)**

Anmelder: **CARL ZEISS-STIFTUNG HANDELND
ALS CARL ZEISS**

**D-7920 Heidenheim (Brenz)(DE)**

(72) Erfinder: **Marx, Dieter
Neuffenweg 18
D-7080 Aalen-Waldhausen(DE)**

(54) **Vorrichtung zur Durchführung eines Funktionstests an einem Wärmebildgerät.**

(57) Ein senkrecht zur optischen Achse eines Wärmebildgerätes einschwenkbarer Spiegel ermöglicht einen einfachen Funktionstest für ein Wärmebildgerät.

# Fig.1

EP 0 262 322 A2

## Vorrichtung zur Durchführung eines Funktionstests an einem Wärmebildgerät

Wärmebildgeräte dienen zum Detektieren von Zielen, die sich durch ihre Temperatur von der Umgebung unterscheiden. Bekannte Wärmebildgeräte, wie sie beispielsweise in der deutschen Offenlegungsschrift 1 772 312 beschrieben sind, enthalten eine IR-Optik, ein Abtastprisma und eine Detektorreihe, wobei hinter der Detektorreihe eine Auswerteelektronik angeordnet ist, welche die aufgenommenen Signale an eine Lumineszens-Diodenreihe weitergibt. Die von der Lumineszens-Diodenreihe ausgehenden Strahlen können zur Erzeugung eines IR-Bildes auf einem Bildschirm dienen.

Für den militärischen Einsatz von Wärmebildgeräten ist eine einfache Überprüfungsmöglichkeit seiner Funktion erforderlich ein einfacher Funktionstest wäre beispielsweise durch die Inbetriebnahme des Wärmebildgerätes gegeben. Am erzeugten IR-Bild ist zu erkennen, ob das Wärmebildgerät einwandfrei arbeitet. Tritt nun aber der Fall ein, daß das Wärmebildgerät in einem in einer Halle stehenden Fahrzeug, beispielsweise einem Flugzeug oder einem Panzer eingebaut ist und auf eine strukturlose Fläche, wie sie beispielsweise eine Tür oder eine Wand darstellt, gerichtet ist, so erscheint auf dem Bildschirm des Wärmebildgerätes eine gleichmäßig leuchtende Fläche, aus der nicht ersichtlich ist, ob das Wärmebildgerät normal arbeitet.

Der Erfindung liegt die Aufgabe zugrunde, für einen derartigen Fall eine Vorrichtung anzugeben, die einen einfachen Funktionstest dadurch liefert, daß sie eine Aussage "Funktion Wärmebildgerät ja-nein" trifft

Diese Aufgabe wird erfindungsgemäß dadurch gelöst, daß in Sichtweitenabstand vor dem Bildschirm des Wärmebildgerätes ein um eine Achse drehbarer Schwenkspiegel angeordnet ist, der in eine Position senkrecht zur optischen Achse des Wärmebildgerätes einschwenkbar ist und der seine reflektierende Fläche dem Bildschirm des Wärmebildgerätes zuwendet.

Die angegebene Lösung macht sich das sogenannte "Narziß-Bild" zunutze, das immer dann entsteht, wenn mit einem Wärmebildgerät auf eine Spiegelfläche, die senkrecht zur optischen Achse des Wärmebildgerätes steht geschaut wird. In diesem Fall sieht sich der Detektor selbst, d.h. im Wärmebild wird die Struktur des Detektors sichtbar. Im Normalbetrieb eines Wärmebildgerätes ist dieser Effekt unerwünscht, zur beschriebenen Lösung für einen Funktionstest wird der Effekt genutzt, da die im Wärmebild erscheinende Detektorstruktur ein eindeutiger Beweis für eine einwandfreie Funktion des Wärmebildgerätes ist.

Ein Ausführungsbeispiel der Erfindung ist in der Zeichnung dargestellt und wird im folgenden näher beschrieben. Es zeigen

Figur 1 eine Seitenansicht eines Wärmebildgerätes mit einem Schwenkspiegel für den Funktionstest;

Figur 2 die im Funktionstest erzeugte Detektorstruktur im Wärmebild.

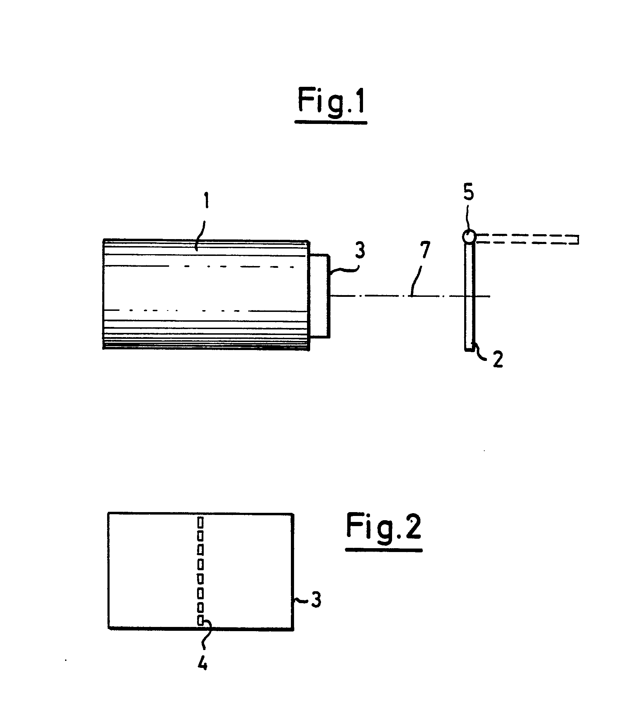

In der dargestellten Zeichnung ist mit dem Bezugszeichen (1) das Wärmebildgerät bezeichnet, mit (3) ein Bildschirm, mit (7) die optische Achse, mit (2) ein um die Achse (5) drehbarer Schwenkspiegel und mit (4) das im Wärmebild erzeugte Narzißbild der Detektorstruktur. In der Fig. 1 ist der Schwenkspiegel (2) in der für den Funktionstest erforderlichen Stellung mit durchgezogenen Linien bezeichnet, in der aus der optischen Achse herausgeschwenkten Stellung ist die Lage des Spiegels mit gestrichelten Linien angedeutet.

### Ansprüche

Vorrichtung zur Durchführung eines Funktionstests an einem Wärmebildgerät, dadurch gekennzeichnet, daß in Sichtweitenabstand vor dem Bildschirm (3) des Wärmebildgerätes (1) ein um eine Achse (5) drehbarer Schwenkspiegel (2) angeordnet ist, der in eine Position senkrecht zur optischen Achse (7) des Wärmebildgerätes (1) einschwenkbar ist und der seine reflektierende Fläche dem Bildschirm (3) des Wärmebildgerätes (1) zuwendet.

## Fig.1

1
3
7
5
2

## Fig.2

3
4